# EUROPEAN PATENT APPLICATION

(11) **EP 4 505 908 A1**
(43) Date of publication of application: **12.02.2025**
(21) Application number: 22936403.9
(22) Date of filing: 23.12.2022
(51) Int. Cl.: A47C 27/06

(54) **BALANCE CUSHION CORE, BALANCE CUSHION, RESILIENT CUSHION, AND FURNITURE**

(30) Priority: 08.04.2022 CN 202210378209
(71) Applicant: Leng, Luhao, Xiamen, Fujian 361005 (CN)
(72) Inventor: Leng, Luhao, Xiamen, Fujian 361005 (CN)
(74) Representative: Zacco Sweden AB
(86) International application number: PCT/CN2022/141530
(87) International publication number: WO 2023/193478

(57) **Abstract**

The present disclosure relates to the field of elastic pads and provides a balance pad core, a balance pad, an elastic pad, and a furniture. The balance pad is used for an elastic pad. The balance pad core comprises a pad core layer that comprises a first outer surface and a second outer surface arranged opposite each other in a thickness direction thereof, wherein: the first outer surface comprises a plurality of receiving holes arranged at predetermined intervals, each of the plurality of receiving holes being configured to receive a corresponding elastic module of the elastic pad to limit movement of the elastic module in a transverse direction of the pad core layer; the second outer surface is formed thereon with a plurality of partition grooves that partition the second outer surface into a plurality of partitioned zones, such that each of the partitioned zones is provided with at least one of the receiving holes. With the partition grooves, the present disclosure can reduce or mitigate the dragging and shake of the elastic pad when a pressure is applied, so as to enable the elastic pad to provide higher comfort when in use.

## Description

### TECHNICAL FIELD

The present disclosure relates to the field of elastic pads, and in particularly to a balance pad core, a balance pad, an elastic pad and a furniture.

### BACKGROUND

Furniture such as beds and sofa beds are essentials in the daily life. Most of existing beds and sofa beds are provided with an elastic pad. The elastic pad has a certain elasticity. When a person lies on a bed or sofa bed, the elastic pad can provide an elastic support to a certain degree, which is more comfortable than a hard pad.

The conventional elastic pads are generally a kind of non-detachable, one-piece, integral pads formed from a sponge overlay layer and a spring layer, wherein the sponge overlay layer is arranged on the spring layer. However, in practical use, when being subjected to a great pressure, the elastic pads (for example, when used as mattresses) will be dragged and shaken. For example, if there is a great weight difference between individuals, one of them will affect the other one when turning over or moving, thus reducing the comfort of the elastic pad and the good feeling of the user.

### SUMMARY

To address at least some problems existing in the prior art products, the object of the present disclosure is to reduce or mitigate the dragging and shake of the elastic pad when a pressure is applied, so as to improve the comfort of the elastic pad in use.

In order to achieve the above object, in a first aspect, the present disclosure provides a balance pad core for use with an elastic pad, comprising a pad core layer that comprises a first outer surface and a second outer surface arranged opposite each other in a thickness direction thereof, wherein the first outer surface comprises a plurality of receiving holes arranged at predetermined intervals, each of the plurality of receiving holes being configured to receive a corresponding elastic module of the elastic pad to limit movement of the elastic module in a transverse direction of the pad core layer; the second outer surface is formed thereon with a plurality of partition grooves that partition the second outer surface into a plurality of partitioned zones, such that each of the partitioned zones is provided with at least one of the receiving holes.

According to the above-described technical solution, the first outer surface of the pad core layer comprises a plurality of receiving holes arranged at predetermined intervals, and each of the receiving holes is configured to receive a respective elastic module to limit movement of the elastic module in the transverse direction of the pad core layer (for example, in a direction parallel to the first outer surface). Meanwhile, the second outer surface is formed thereon with a plurality of partition grooves, and the plurality of partition grooves divides the second outer surface into a plurality of partition zones, such that each of the partition zones is provided with at least one receiving hole. In this way, the plurality of partition grooves can divide the second outer surface (typically, an upper surface; correspondingly, the first outer surface is generally a lower surface) of the pad core layer into a plurality of independent portions, such that the pad core layer is made to connect at the lower side while being independently partitioned at the upper side. When assembled to form the elastic pad, the balance pad core ban be laid over a plurality of elastic modules of the elastic pad, which are independent of one another, and a portion of each elastic module can be received and positioned in a respective receiving hole. At this time, with the plurality of partition grooves, it can achieve such an effect that the elastic pad are independent at the upper side while being connected as a whole at the lower side. Moreover, the receiving hole plays a role of transversely cushioning and limiting the position of the elastic module received therein. When a force is applied to the elastic pad such that each of the elastic modules is compressed, the movement of each elastic module in the transverse direction (i.e., the direction parallel to the pad core layer) can be limited effectively. Meanwhile, as the partition effect produced by the partition grooves, the dragging and shaking of the unpressurized portion caused by the pressurized portion can be reduced or mitigated effectively. This can significantly prevent the elastic pad from being dragged and shaken and can avoid tilting of each elastic module caused by the force, to effectively maintain support stability of each elastic module, and improve stability of the elastic pad when a pressure is applied thereto such that the elastic pad can provide higher comfort.

In some embodiments, each of at least some partitioned zones in the plurality of the partitioned zones is surrounded by the partition groove.

In some embodiments, the plurality of the partition grooves are configured to communicate with each other.

In some embodiments, the plurality of the partition grooves comprises a plurality of first extension grooves spaced apart and extending in a first direction, and a plurality of second extension grooves spaced apart and extending in a second direction, the plurality of the first extension grooves and the plurality of the second extension grooves intersect with each other, and the first direction and the second direction are arranged at an angle.

In some embodiments, the first direction and the second direction are perpendicular to each other.

In some embodiments, a cross sectional area of the partition groove is decreased gradually in a direction from the first outer surface to the second outer surface.

In some embodiments, a cross section of the partition groove is of a V shape.

In some embodiments, a bottom portion of the partition groove is spaced from the first outer surface at a predetermined distance.

In some embodiments, the predetermined distance is 1/2-1/4 of a thickness of the pad core layer.

In some embodiments, one of the receiving holes is arranged within each of the partitioned zones.

In some embodiments, the receiving hole is a tapered through hole penetrating through the pad core layer.

In some embodiments, the pad core layer is a sponge pad core layer.

In a second aspect, the present disclosure provides a balance pad which comprises: the balance pad core according to any one of the embodiments in the first aspect; a first cladding layer covering the first outer surface and entering into each of the receiving holes to cover an inner surface of the receiving hole; and a second cladding layer covering the second outer surface.

According to the above-described technical solution in the second aspect, the first cladding layer covers the first outer surface and enters into each receiving hole to cover the inner surface of the receiving hole, and the second cladding layer covers the second outer surface. In this way, with the first cladding layer and the second cladding layer, the overall stability and durability of the balance pad can be effectively improved.

In some embodiments, the second cladding layer at least partly enters into each of the partition grooves to cover an inner surface of the partition groove.

In some embodiments, a hole bottom cladding portion of the first cladding layer covering a hole bottom of each of the receiving holes is connected with the second cladding layer.

In some embodiments, an outer peripheral edge of the first cladding layer is connected with an outer peripheral edge of the second cladding layer.

In a third aspect, the present disclosure provides an elastic pad which comprises an elastic module set comprising a plurality of elastic modules; and the balance pad according to any one of the embodiments in the second aspect; wherein the balance pad is arranged to cover the elastic module set, and the plurality of the elastic modules are respectively received within the respective corresponding receiving holes.

As described above, the elastic pad has a significantly improved stability when being subjected to a pressure, and can provide higher comfort.

In some embodiments, the elastic pad is a mattress.

In a fourth aspect, the present disclosure provides a furniture. The furniture comprises the elastic pad according to any one of the embodiments in the third aspect. The furniture is significantly improved in stability and comfort, and elevated in overall quality.

The furniture comprises, but is not limited to, a bed, a sofa, a chair, a sofa bed, an upholstered bench and the like.

Obviously, elements or features as described in each single embodiment can be used, alone or in combination, in other embodiment(s).

### BRIEF DESCRIPTION OF THE DRAWINGS

Dimensions and proportions in the drawings do not represent the dimensions and proportions of actual products. The drawings are only provided illustratively, and some unnecessary elements or features are omitted therefrom for clarity.
Fig. 1 exemplarily illustrates a perspective view of a balance pad according to an embodiment of the present disclosure.
Fig. 2 is a top view of a structure of the balance pad in Fig. 1.
Fig. 3 is a bottom view of a structure of the balance pad in Fig. 1.
Fig. 4 is a side view of a partial structure of the balance pad in Fig. 1 in a direction D1.
Fig. 5 is a side view of a partial structure of the balance pad in Fig. 1 in a direction D2.
Fig. 6 is a sectional view of a structure of a position of the balance pad in Fig. 1.
Fig. 7 is an enlarged view of a partial structure of Fig. 6.
Fig. 8 is an exploded view of the balance pad in Fig. 1.
Fig. 9 is an enlarged view of a partial structure of Fig. 8.
Fig. 10 is an exploded, perspective view of the balance pad in Fig. 1 and an elastic module of an elastic pad provided by the present disclosure.
Fig. 11 is a perspective view of the balance pad and the elastic module in Fig. 10 when in an assembled state.
Fig. 12 exemplarily illustrates a sectional view of a structure of an elastic pad according to an embodiment of the present disclosure.
Fig. 13 exemplarily illustrates a three-dimensional view of a structure of an elastic pad according to an embodiment of the present disclosure.
Fig. 14 is an amplified, sectional view of a partial structure of a position of a balance pad according to a further embodiment of the present disclosure.
Fig. 15 is an amplified, partial view of a balance pad according to a still further embodiment of the present disclosure when in an exploded state.

### Reference signs

1 - balance pad core, 2 - pad core layer, 3 - first outer surface, 4 - second outer surface, 5 - receiving hole, 6 - elastic pad, 7 - elastic module, 8 - partitioned zone, 9 - annular groove, 10 - balance pad, 11 - first extension groove, 12 - second extension groove, 13 - first cladding layer, 14 - second cladding layer, 15 - hole bottom cladding portion, 16 - elastic module set, 17 - surface layer, 18 - cloth, 19 - side enclosure.

### DETAILED DESCRIPTION OF EMBODIMENTS

Reference now will be made to the drawings to describe in detail the balance pad core, the balance pad, the elastic pad and the furniture according to the present disclosure. What will be described herein will only cover preferred embodiments of the present disclosure, and those skilled in the art would envision, on the basis of the preferred embodiments, other possible manners which also fall into the scope described herein.

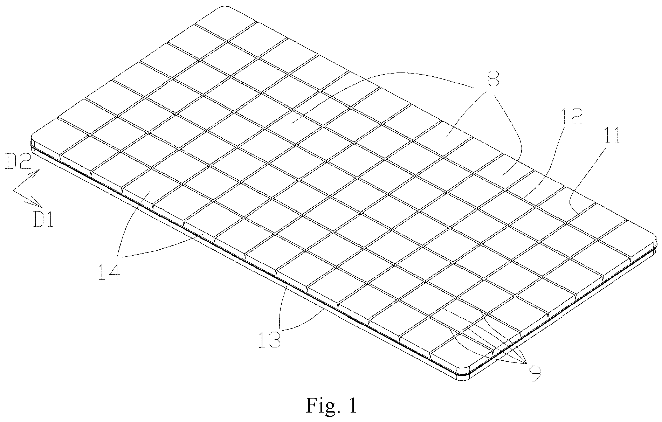

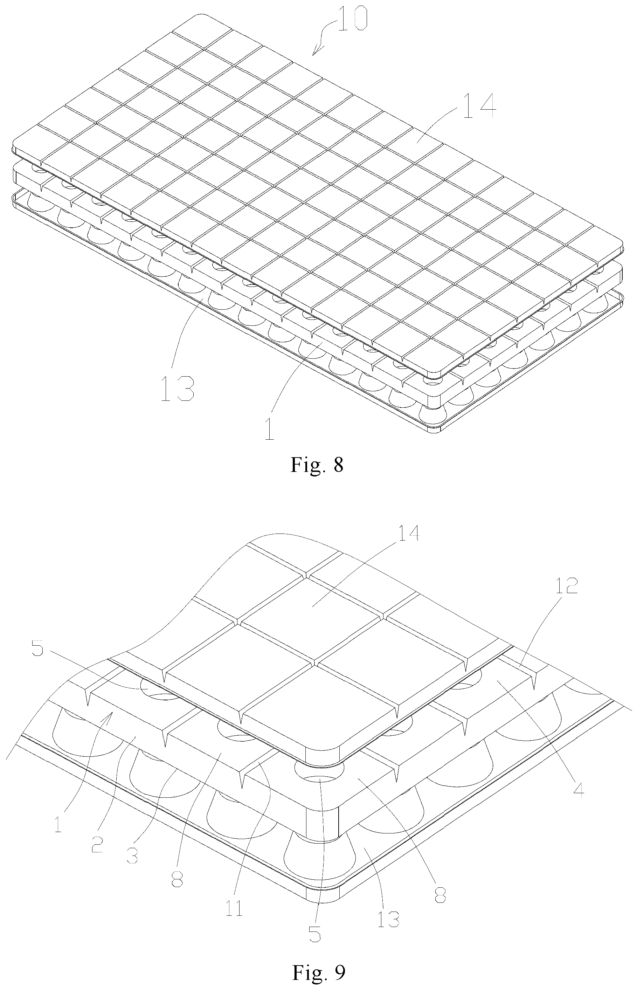

Referring to Figs. 1-9, the balance pad core provided by the first aspect of the present disclosure is applied to an elastic pad. The balance pad core 1 comprises a pad core layer 2 that comprises a first outer surface 3 and a second outer surface 4 arranged opposite each other in a thickness direction. For example, in Fig. 9, the lower surface of the pad core layer 2 is a first outer surface, and the upper surface is a second outer surface 4. The first outer surface 3 comprises a plurality of receiving holes 5 arranged at predetermined intervals, each receiving hole 5 is configured to receive a respective elastic module 7 of an elastic pad 6 to limit movement of the elastic module 7 in the transverse direction of the pad core layer; the second outer surface 4 is formed thereon with a plurality of partition grooves that partition the second outer surface 4 into a plurality of partitioned zones 8, such that each of the partitioned zones is provided with at least one of the receiving holes 5.

According to the above-described balance pad core 1, the first outer surface 3 of the pad core layer 2 comprises a plurality of receiving holes 5 arranged at predetermined intervals, each of the receiving holes 5 is configured to receive a respective a respective elastic module 7 of the elastic module 6 to limit movement of the elastic module 7 in the transverse direction of the pad core layer 2 (for example, in a direction parallel to the first outer surface 3). Meanwhile, the second outer surface 4 is formed thereon with a plurality of partition grooves, and the plurality of partition grooves divides the second outer surface 4 into a plurality of partition zones 8, such that each of the partitioned zones is provided with at least one receiving hole. In this way, the plurality of partition grooves can divide the second outer surface 4 (typically, an upper surface; correspondingly, the first outer surface 3 is generally a lower surface) of the pad core layer 2 into a plurality of independent portions, such that the pad core layer 2 is made to connect at the lower side while being independently partitioned at the upper side. When assembled to form the elastic pad 6, the balance pad core 1 can be laid over a plurality of elastic modules 7 of the elastic pad 6, which are independent of one another, and a portion of each elastic module 7 can be received and positioned in a respective receiving hole 5. At this time, with the plurality of partition grooves, it can achieve such an effect that the elastic pad is independent at the upper side while being connected as a whole at the lower side. Moreover, the receiving hole 5 plays a role of transversely cushioning and limiting the position of the elastic module 7 received therein. When a force is applied to the elastic pad such that each of the elastic modules 7 is compressed, movement of each elastic module 7 in the transverse direction (i.e., the direction parallel to the pad core layer) can be effectively restricted. Meanwhile, as the partition effect produced by the partition grooves, the dragging and shaking of the unpressurized portion caused by the pressurized portion can be reduced or mitigated. This can significantly prevent the elastic pad from being dragged and shaken and can avoid tilting of each elastic module 7 caused by a force, to effectively maintain support stability of each elastic module 7, and improve stability of the elastic pad 6 when a pressure is applied thereto such that the elastic pad 6 can provide higher comfort.

In addition, in some embodiments of the balance pad core 1, the partition grooves may have various arrangements. No matter which arrangement used, the partition grooves can divide the second outer surface 4 into a plurality of partitioned zones 8, and each of the partitioned zones 8 is provided with at least one receiving hole 5. For example, in one arrangement, each of at least one partitioned zones in the plurality of partitioned zones 8 at the periphery is surrounded by the partition groove. For example, a plurality of partition grooves comprises annular grooves 9, and a partitioned zone 8 enclosed by each annular groove 9 has at least one receiving hole 5 arranged therein. The plurality of annular grooves 9 may be spaced apart from each other, or may communicate with each other. The annular groove 9 may be a circular groove, a square groove, or a groove in other shape. Alternatively, in one further arrangement, the partition groove may be a non-closed (i.e., opened) groove, for example, a U-shaped or V-shaped groove, or the like.

In some embodiments of the balance pad core 1, the plurality of partition grooves may be spaced apart, rather than communicate with each other. For example, a plurality of grooves 9 are spaced apart from each other. Alternatively, in some other embodiments of the balance pad core 1, referring to Figs. 1, 2 and 9, the plurality of partition grooves are configured to communicate with each other, which can further improve the independent effect at the upper side of the pad core layer. For example, the respective annular grooves 9 communicate with each other at some edges. For instance, the respective annular grooves 9 may share some edges, or the respective grooves 9 may be spaced apart and communicate with each other via communication grooves.

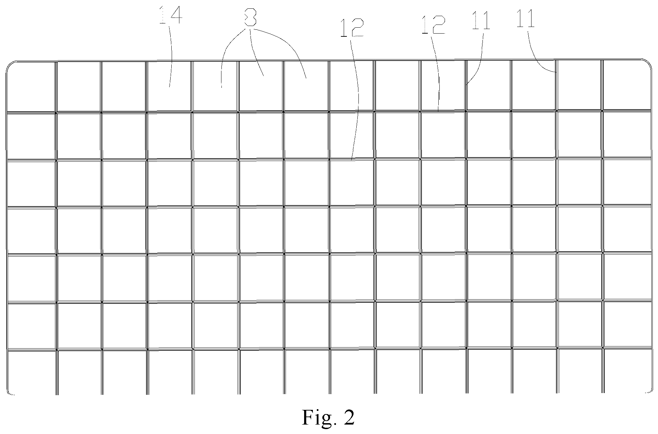

In some embodiments, referring to Figs. 1, 2 and 9, the plurality of partition grooves comprises a plurality of first extension grooves 11 spaced apart and extending along a first direction, and a plurality of second extension grooves 12 spaced apart and extending along a second direction, wherein the plurality of first extension grooves 11 and the plurality of second extension grooves 12 intersect with each other, and the first direction and the second direction arranged at an angle. As the plurality of first extension grooves 11 and the plurality of second extension grooves 12 intersect with each other, a plurality of partitioned zones can be partitioned on the second outer surface 4, and the respective partitioned zones communicate with each other. In some embodiments, the angle between the first direction and the second direction may be less than 90°, for example, such that each partitioned zone is of a diamond shape. In some embodiments, the first direction and the second direction are perpendicular to each other. For example, in Fig. 2, the first direction is a vertical direction, the second direction is a horizontal direction, and each partitioned zone 8 thus forms a square block. The intervals between the first extension grooves 11 may be equal, or may not be equal, and the intervals between the second extension grooves 12 may be equal, or may not equal.

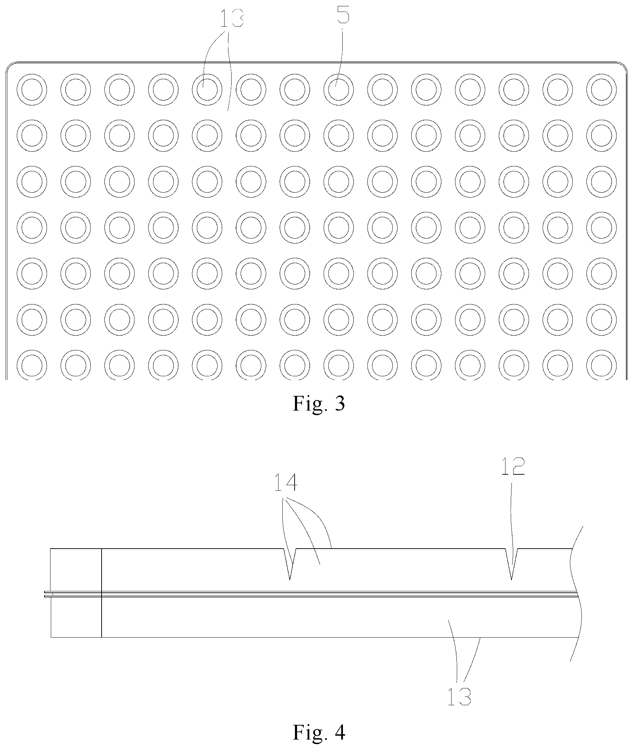

In some embodiments, referring to Figs. 4, 5 and 9, the cross sectional area of the partition groove is decreased (for example, decreased gradually) in a direction from the first outer surface 3 to the second outer surface 4. In this way, it can improve the separation effect at the upper side of the pad core layer 2 while further ensuring the integrity of the connection at the lower side of the pad core layer 2, to enhance the function of transversely limiting the respective elastic module. Alternatively, in some other embodiments, the cross sectional area of the partition groove is equal in the direction from the first outer surface 3 to the second outer surface 4.

Referring to Figs. 4, 5 and 9, the cross section of the partition groove has a V-shape, an arc flaring gradually, a semi-circle, or an inverted trapezoid.

In some embodiments, some arrangements of the partition groove may allow the partition groove to penetrate the pad core layer 2 in the thickness direction as long as the partitioned zones 8 are connected to the pad core layer 2. For example, when the partition grooves comprise a plurality of circumferential groove segments spaced apart in the circumferential direction, each circumferential groove segment can penetrate the pad core layer 2 in the thickness direction.

In some other embodiments, the bottom portion of the partition groove is spaced from the first outer surface 3 at a predetermined distance. In the case, according to the actual requirement, any type of partition grooves having the required arrangement can be formed on the second outer surface 4, to improve the application flexibility of the balance pad core. The predetermined distance could be selected as actually required. For example, in some embodiments, the predetermined distance is 1/2-1/4 of the thickness of the pad core layer 2. In an embodiment, the predetermined distance is 1/3 of the thickness of the pad core layer 2.

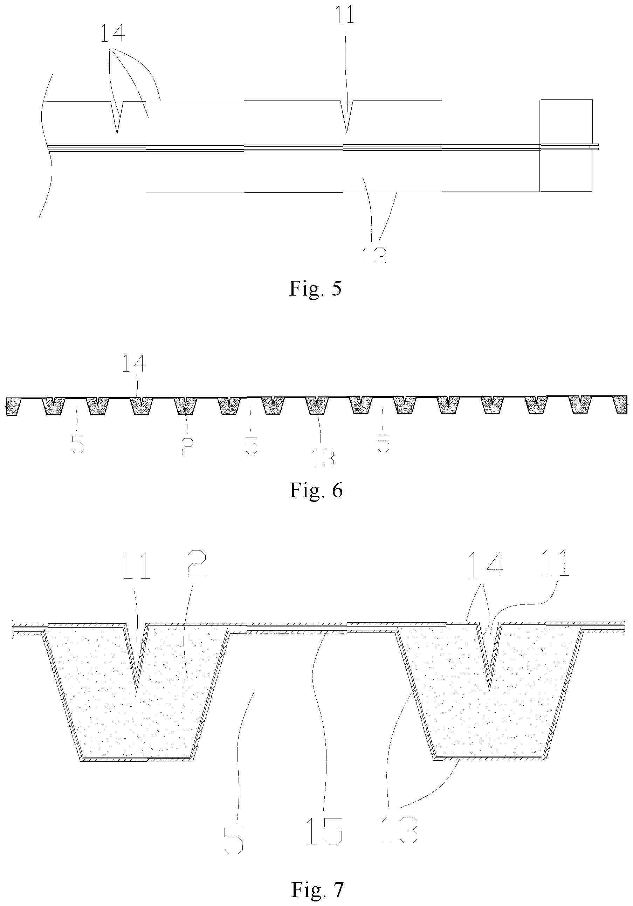

In some embodiments, each partitioned zone 8 may be provided with a plurality of receiving holes, for example, 2 or 3 receiving holes. In some other embodiments, referring to Figs. 6 and 7, each partitioned zone 8 is provided with a receiving hole 5, i.e., a receiving hole 5 is entirely located within a respective partitioned zone 8. This can effectively reduce or mitigate the pulling or shaking of the unpressurized portion caused by the pressurized portion, maintain the support stability of each elastic module 7, and improve stability of the elastic pad 6 when a pressure is applied such that the elastic pad 6 can provide higher comfort.

In some embodiments, the receiving hole 5 does not penetrate the pad core layer 2 in the thickness direction. Alternatively, in some other embodiments, referring to Figs. 6, 7 and 9, the receiving hole 5 penetrates through the pad core layer 2 in the thickness direction. In the case, when the upper end of each elastic module 7 is received and positioned in the respective corresponding receiving hole 5, the independence of the upper end of each elastic module 7 can be further enhanced. In addition, in some embodiments, the receiving hole 5 may be a hole with an equal diameter. Alternatively, in some other embodiments, the receiving hole 5 may be a tapered hole. For example, in some embodiments, as shown in Fig. 6, the receiving hole 5 is a tapered through hole penetrating the pad core layer 2. Therefore, the tapered hole may be stably and reliably sleeved on each elastic module 7 as the tapered inner surface is tapered to squeeze the elastic module 7.

The pad core layer 2 may be formed of any appropriate material. For example, the pad core player 2 may be a rubber pad core layer, a silicon pad core layer, or a sponge pad core layer that can improve the breathability of the pad core layer while providing a good elasticity.

In a second aspect, the present disclosure provides a balance pad 10. Referring to Figs. 1-9, the balance pad 10 comprises any balance pad core 1 as described above in the first aspect, a first cladding layer 13, and a second cladding layer 14, wherein the first cladding layer 13 covers the first outer surface 1 and enters into each receiving hole 5 to cover the inner surface of the receiving hole 5; referring to Figs. 7, 14 and 15, the second cladding layer 14 covers the second outer surface.

In said technical solution, the first cladding layer 13 covers the first outer surface 3 and enters into each receiving hole 5 to cover the inner surface of the receiving hole 5, and the second cladding layer 14 covers the second outer surface 4. In this way with the first cladding layer 13 and the second cladding layer 14, the overall stability and durability of the balance pad can be effectively improved.

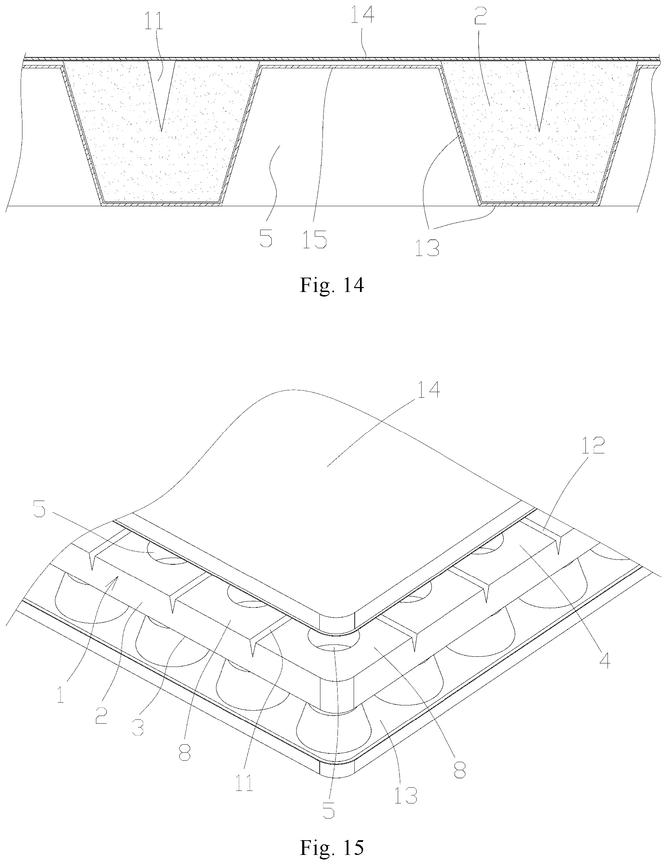

In the balance pad 10, in some embodiments, the second cladding layer 14 can flatly cover the second outer surface 4 but does not enter into each partition groove, for example, referring to Figs. 14 and 15.

In some other embodiments, referring to Fig. 7, the second cladding layer 14 at least partly enters into each partition groove to cover the inner surface of the partition groove. For example, the second cladding layer 14 can enter into a part of each partition groove, or can enter into the entire partition groove. In the case, the first cladding layer 13 covers the first outer surface 3 and enters each receiving hole 5 to cover the inner surface of the receiving hole 5, and the second cladding layer 14 covers the second outer surface 4 and enters into each partition groove to cover the inner surface of the partition groove. Accordingly, the second cladding layer 14 covers and positions the inner surface of the partition groove, such that the first cladding layer 13 and the second cladding layer 14 can cover and protect the balance pad core 1 in a good effect, to effectively improve the overall stability and durability of the balance pad.

The first cladding layer 13 and the second cladding layer 14 may be formed of non-woven fabric, canvas, or other fabric. The first cladding layer 13 and the second cladding layer 14 may arranged on the first outer surface 3 and the second outer surface 4 by ultrasonically welding, or by sewing, or by adhesion, or in other manner.

Although the second cladding layer 14 covers the second outer surface 4, when the receiving hole 5 is a through hole, in some embodiments, the second cladding layer 14 may not cover the receiving hole 5, i.e., the second cladding layer 14 is formed with an avoidance hole corresponding to the receiving hole 5, wherein the edge of the avoidance hole can be connected with a portion of the first cladding layer 13 that enters each receiving hole 5 to cover the inner surface of the receiving hole 5. Alternatively, in some embodiments, the second cladding layer 14 may cover the receiving holes 5. In the case, in the receiving holes 5, the hole bottom cladding portion 15 of the first cladding layer 13 located at the hole bottom of each receiving hole 5 can be held a distance away from the second cladding layer 14, not being connected with the latter. Alternatively, the hole bottom cladding portion 15 of the first cladding layer 13 located at the hole bottom of each receiving hole 5 is connected with the second cladding layer 14, to increase the thickness of the hole bottom cladding portion 15 and thus improve the durability when the bottom hole covering portion 15 is in contact with the top of the elastic module. In addition, the hole bottom cladding portion 15 and the second cladding layer 14 may be directly connected with each other, for example, sewn through regular or irregular sutures, or the hole bottom cladding portion 15 and the second cladding layer 14 may sandwich at least one middle pad layer therebetween.

The outer peripheral edge portion of the first cladding layer 13 and the outer peripheral edge portion of the second cladding layer 14 are held a distance away from each other, not being connected, or may be connected with each other. For example, at the middle position on the outer peripheral surface of the pad core layer 2 in the thickness direction, the outer peripheral edge portion of the first cladding layer 13 is connected with the outer peripheral edge portion of the second cladding layer 14, thus improving the overall reliability of the balance pad 10.

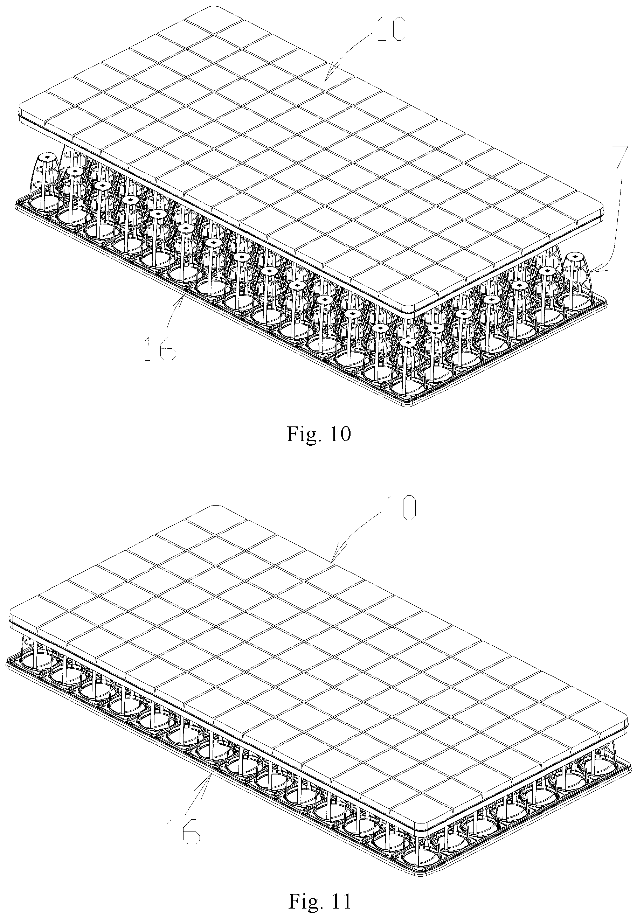

In a third aspect, the present disclosure provides an elastic pad 6. Referring to Figs. 10 and 11, the elastic pad 6 comprises an elastic module set 16, and any balance pad 10 as described above in the second aspect, wherein the elastic module set 16 comprises a plurality of elastic modules 7, the balance pad 10 is arranged to cover the elastic module set 16, and the plurality of elastic modules 7 are respectively received within the corresponding receiving holes 5. As described above, the elastic pad has a significantly improved stability when being subjected to a pressure, and can provides higher comfort.

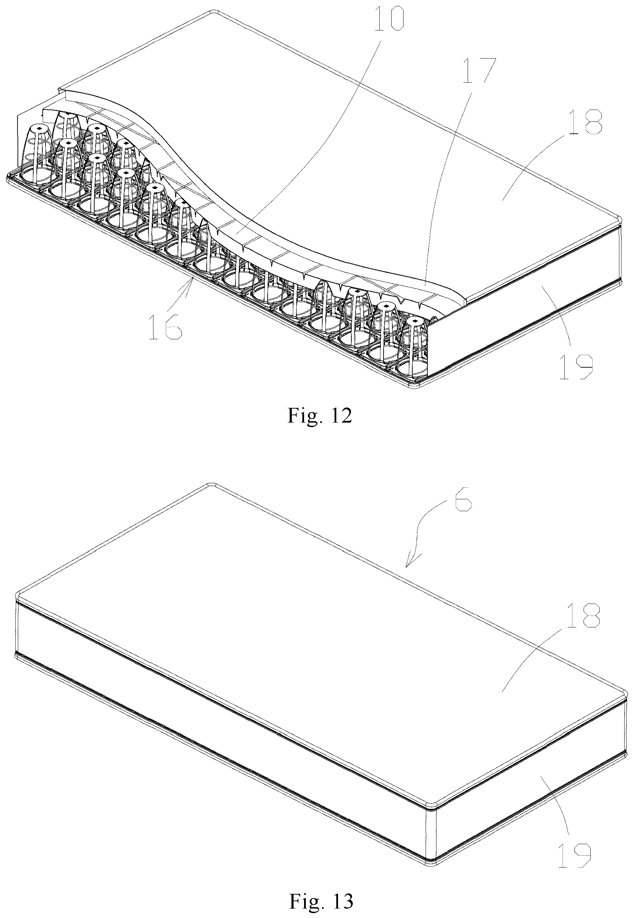

Referring to Figs. 12 and 13, the elastic pad may comprise a surface layer 17, a cloth 18, and a side enclosure 19, wherein the surface layer 17 may be a hard surface layer or elastic surface layer and may be laid and positioned on the upper surface of the balance pad 10, and the cloth 18 is laid and positioned on the surface layer 17 and connected with the side enclosure 19, for example, detachably connected with the side enclosure 19 via a zipper or a hook-and loop fastener.

The elastic pad according to the present disclosure may be a mattress, a sofa cushion, or a chair cushion.

Furthermore, in a fourth aspect, the present disclosure provides a furniture comprising the elastic pad 6 according to any one of the embodiments as described above. The furniture is significantly improved in comfort and hygienic environment, and elevated in overall quality.

The furniture comprises, but is not limited to, a bed, a sofa, a chair, a sofa bed, an upholstered bench, and the like.

The scope of protection of the present disclosure is defined only by the appended claims. Given the teaching of the present disclosure, those skilled in the art could easily envision using alternative structures of those disclosed herein as feasible alternative embodiments, and combining the embodiments disclosed herein to form new embodiments, which should all fall into the scope defined by the appended claims.

## Claims

1. A balance pad core for use with an elastic pad, the balance pad core (1) comprises a pad core layer (2) that comprises a first outer surface (3) and a second outer surface (4) arranged opposite each other in a thickness direction thereof, wherein:
the first outer surface (3) comprises a plurality of receiving holes (5) arranged at predetermined intervals, each of the plurality of receiving holes (5) being configured to receive a corresponding elastic module (7) of the elastic pad (6) to limit movement of the elastic module (7) in a transverse direction of the pad core layer;
the second outer surface (4) is formed thereon with a plurality of partition grooves that partition the second outer surface (4) into a plurality of partitioned zones (8), such that each of the partitioned zones (8) is provided with at least one of the receiving holes (5).

2. The balance pad core of claim 1, wherein each of at least some partitioned zones in the plurality of the partitioned zones (8) is surrounded by the partition groove.

3. The balance pad core of claim 1, wherein the plurality of the partition grooves are configured to communicate with each other.

4. The balance pad core of claim 1, wherein the plurality of the partition grooves comprise a plurality of first extension grooves (11) spaced apart and extending in a first direction, and a plurality of second extension grooves (12) spaced apart and extending in a second direction, the plurality of the first extension grooves (11) and the plurality of the second extension grooves (12) intersect with each other, and the first direction and the second direction are arranged at an angle.

5. The balance pad core of claim 4, wherein the first direction and the second direction are perpendicular to each other.

6. The balance pad core of claim 1, wherein a cross sectional area of the partition groove is decreased gradually in a direction from the first outer surface (3) to the second outer surface (4).

7. The balance pad core of claim 6, wherein a cross section of the partition groove is of a V shape.

8. The balance pad core of claim 1, wherein a bottom portion of the partition groove is spaced from the first outer surface (3) at a predetermined distance.

9. The balance pad core of claim 8, wherein the predetermined distance is 1/2-1/4 of a thickness of the pad core layer (2).

10. The balance pad core of claim 1, wherein one of the receiving holes (5) is arranged within each of the partitioned zones (8).

11. The balance pad core of claim 1, wherein the receiving hole (5) is a tapered through hole penetrating through the pad core layer (2).

12. The balance pad core of any one of claims 1-11, wherein the pad core layer (2) is a sponge pad core layer.

13. A balance pad (10) comprising:
the balance pad core (1) according to any one of claims 1-12;
a first cladding layer (13) covering the first outer surface (3) and entering into each of the receiving holes (5) to cover an inner surface of the receiving hole (5); and
a second cladding layer (14) covering the second outer surface.

14. The balance pad of claim 13, wherein the second cladding layer (14) at least partly enters into each of the partition grooves to cover an inner surface of the partition groove.

15. The balance pad of claim 13, wherein a hole bottom cladding portion (15) of the first cladding layer (13) covering a hole bottom of each of the receiving holes (5) is connected with the second cladding layer (14).

16. The balance pad of any one of claims 13-15, wherein an outer peripheral edge of the first cladding layer (13) is connected with an outer peripheral edge of the second cladding layer (14).

17. An elastic pad (6) comprising:
an elastic module set (16) comprising a plurality of elastic modules (7); and
the balance pad (10) according to any one of claims 13-16;
wherein the balance pad (10) is arranged to cover the elastic module set (16), and the plurality of the elastic modules (7) are respectively received within the respective corresponding receiving holes (5).

18. The elastic pad of claim 17, wherein the elastic pad is a mattress.

19. A furniture, wherein the furniture comprises the elastic pad (6) of claim 17 or 18.
